# EUROPÄISCHE PATENTANMELDUNG

(11) **EP 4 663 086 A1**
(43) Veröffentlichungstag der Anmeldung: **17.12.2025**
(21) Anmeldenummer: 24181225.4
(22) Anmeldetag: 10.06.2024
(51) Int. Cl.: A47L 11/40, G05D 1/00, B60L 58/12, B60L 58/24

(54) **ARBEITSGERÄT, BASISSTATION UND ARBEITSSYSTEM**

(71) Anmelder: Vorwerk & Co. Interholding GmbH, 42275 Wuppertal (DE)
(72) Erfinder: Starflinger, Frank, 44793 Bochum (DE)
(74) Vertreter: Dr. Solf & Zapf Patent- und Rechtsanwalts PartG mbB

(57) **Zusammenfassung**

Die vorliegende Erfindung betrifft Arbeitsgerät (1), aufweisend mindestens eine Steuereinheit (2) und mindestens einen Energiespeicher (3), wobei das Arbeitsgerät (1) dazu ausgebildet und eingerichtet ist, sich in einer Arbeitsumgebung (4) autonom fortzubewegen, wobei die Steuereinheit (2) dazu ausgebildet und eingerichtet ist, das Arbeitsgerät (1) zu veranlassen, sich zu einer Basisstation (5) in der Arbeitsumgebung (4) zu bewegen, wenn ein Ladezustand des Energiespeichers (3) einen Schwellenwert erreicht, wobei die Steuereinheit (2) dazu ausgebildet und eingerichtet ist, den Schwellenwert unter Verwendung von Fahrwegdaten in Bezug auf mindestens eine Basisstation (5) anzupassen.

## Beschreibung

Die Erfindung betrifft ein Arbeitsgerät, aufweisend mindestens eine Steuereinheit und mindestens einen Energiespeicher. Das Arbeitsgerät ist dazu ausgebildet und eingerichtet, sich in einer Arbeitsumgebung autonom fortzubewegen. Die Steuereinheit ist dazu ausgebildet und eingerichtet, das Arbeitsgerät zu veranlassen, sich zu einer Basisstation in der Arbeitsumgebung zu bewegen, wenn ein Ladezustand des Energiespeichers einen Schwellenwert erreicht.

Gattungsgemäße Arbeitsgeräte sind im Stand der Technik in einer Vielzahl von Ausgestaltungen bekannt. Derartige Arbeitsgeräte sind dazu ausgebildet, sich in einer Arbeitsumgebung autonom fortzubewegen und Arbeitsaufgaben zu erledigen. Ein Beispiel für solche Arbeitsgeräte sind Reinigungsgeräte, die in einer Arbeitsumgebung Reinigungsaufgaben erledigen, Transportroboter in der Lagerlogistik oder Sicherheitsroboter, die zu Überwachungszwecken eingesetzt werden. Ein Reinigungsgerät ist beispielsweise als Saugroboter, Wischroboter oder Saug- und Wischroboter ausgebildet. Üblicherweise verfügen derartige Arbeitsgeräte über mindestens eine Steuereinheit, die eine Datenverarbeitungseinheit umfasst, und die mit einer Mehrzahl von Sensoren eine Navigation des Arbeitsgerätes in der Arbeitsumgebung gewährleistet sowie das Erledigen von Arbeitsaufgaben steuert.

Aus dem Stand der Technik bekannte Arbeitsgeräte werden mit Energiespeichern in Form von Akkumulatoren betrieben. Um zu gewährleisten, dass das Arbeitsgerät nicht aufgrund eines leeren Energiespeichers in der Arbeitsumgebung stehen bleibt, sind übliche Steuereinheiten derartiger Arbeitsgeräte dazu eingerichtet, das Arbeitsgerät zu veranlassen, eine Basisstation zum Aufladen des Energiespeichers aufzusuchen, wenn der Ladezustand des Energiespeichers einen Schwellenwert erreicht.

Für die Fahrt zur Basisstation, um dort zu laden und um anschließend wieder zum letzten Punkt der Reinigung zurückzukehren, um die Reinigung fortzusetzen, wird ein großer Teil der im Energiespeicher verfügbaren Energie für Leerfahrten verwendet. Ferner werden Arbeitsaufgaben unvermittelt unterbrochen, wenn der Energiespeicher den Schwellenwert erreicht.

Der Erfindung liegt daher die Aufgabe zugrunde, ein Arbeitsgerät anzugeben, bei dem der Energieverbrauch für Leerfahrten und die Planung von Arbeitsaufgaben optimiert ist.

Die vorgenannte Aufgabe ist bei einem gattungsgemäßen Arbeitsgerät mit den Merkmalen des Kennzeichnungsteils des Anspruchs 1 gelöst, nämlich dadurch, dass die Steuereinheit dazu ausgebildet und eingerichtet ist, den Schwellenwert unter Verwendung von Fahrwegdaten in Bezug auf mindestens eine Basisstation anzupassen.

Das Arbeitsgerät ist vorzugsweise als Reinigungsgerät zum Reinigen einer Arbeitsumgebung ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Das Arbeitsgerät verfügt insbesondere über mindestens eine Steuereinheit, die das autonome Bewegen und Reinigen einer Arbeitsumgebung durch das Reinigungsgerät steuert. Die Steuereinheit weist vorzugsweise mindestens eine Datenverarbeitungseinheit mit mindestens einem Prozessor und mindestens einem Speicher auf. Vorzugsweise weist das Arbeitsgerät mindestens eine Sensoreinheit zur Erfassung von Umgebungsdaten auf.

Das Arbeitsgerät weist vorteilhaft mindestens ein Gehäuse auf. An dem Gehäuse des Arbeitsgeräts sind beispielsweise mindestens oder genau zwei Antriebseinheiten angeordnet, die jeweils mindestens einen Motor, insbesondere einen Elektromotor, und mindestens ein Antriebsrad aufweisen. Die beiden Motoren der Antriebseinheiten sind unabhängig voneinander ansteuerbar. Jeder Motor treibt zumindest mittelbar mindestens oder genau ein Antriebsrad an. Es ist beispielsweise auch vorgesehen, dass zwischen Motor und Antriebsrad einer Antriebseinheit ein Getriebe angeordnet ist.

Des Weiteren weist das Arbeitsgerät mindestens einen Energiespeicher auf, der zur Spannungsversorgung des Arbeitsgerätes, insbesondere zur Spannungsversorgung der Steuereinheit und insbesondere mindestens eines Arbeitswerkzeugs, insbesondere mindestens eines Reinigungswerkzeugs, ausgebildet und im Gehäuse elektrisch verschaltet ist.

Um sicherzustellen, dass das Arbeitsgerät eine Basisstation aus eigener Antriebskraft erreicht, ist die Steuereinheit ist dazu ausgebildet und eingerichtet, das Arbeitsgerät zu veranlassen, sich zu einer Basisstation in der Arbeitsumgebung zu bewegen, wenn ein Ladestand eines Energiespeichers einen Schwellenwert erreicht. Erfindungsgemäß ist nun vorgesehen, dass die Steuereinheit dazu ausgebildet und eingerichtet ist, den Schwellenwert unter Verwendung von Fahrwegdaten in Bezug auf mindestens eine Basisstation anzupassen. Der Schwellenwert wird insbesondere so weit angepasst, insbesondere reduziert, dass eine vorausgewählte Basisstation erreicht werden kann. Vorzugsweise berechnet die Steuereinheit, vorzugsweise zu mindestens einem vorbestimmten Zeitpunkt für den aktuellen Ort in der Arbeitsumgebung, in der sich das Arbeitsgerät befindet, den erforderlichen Energieverbrauch, um zur nächstgelegenen Basisstation zu gelangen.

Dadurch bewegt sich das Arbeitsgerät nicht bei Erreichen eines festen Schwellenwerts des Ladezustands des Energiespeichers zu einer Basisstation, um den Energiespeicher zu laden, sondern kann in Abhängigkeit von Fahrwegdaten zu mindestens einer ausgewählten Basisstation noch weiter reinigen, wenn sich die Basisstation in der Nähe befindet. Der Schwellenwert ist vorteilhaft variabel.

Beispielsweise beinhalten die Fahrwegdaten Umgebungsparameter, insbesondere auf einem Pfad zu einer Basisstation, die zum Energieverbrauch beitragen, wie z. B. Steigungen auf dem Pfad und/oder ein Bodenbelag und/oder ein Wechsel eines Bodenbelags und/oder eine Stufe in der Arbeitsumgebung und/oder eine erforderliche Anzahl an Richtungswechseln, die auf dem Weg zur Basisstation vorgenommen werden müssen. Die Anpassung des Schwellenwertes erfolgt vorzugsweise unter Verwendung eines prognostizierten Energieverbrauches zum Zurücklegen des Weges zur nächsten Basisstation als Fahrwegdaten, insbesondere zuzüglich eines Zuschlags von beispielsweise 5 % bis 10 %.

Vorzugsweise ist vorgesehen, dass der Schwellenwert zu jedem Zeitpunkt, insbesondere also live, angepasst und bestimmt wird. Sobald der angepasste Schwellenwert erreicht oder unterschritten wird, begibt sich das Arbeitsgerät zur nächstgelegenen Basisstation. Alternativ dazu ist vorgesehen, dass das Anpassen des Schwellenwertes in vorbestimmten Zeitintervallen, beispielsweise einmal in der Sekunde, alle 5 Sekunden, alle 10 Sekunden, alle 30 Sekunden oder einmal in der Minute, erfolgt.

Die Basisstation ist beispielsweise zumindest oder nur zum Laden des Energiespeichers ausgebildet. Insbesondere ist vorgesehen, dass die Basisstation auch zum Reinigen eines Reinigungswerkzeugs, zum Entleeren eines Schmutzsammelbehälters und/oder zum Befeuchten und/oder Austauschen eines Feuchtreinigungswerkzeugs ausgebildet ist.

Alternativ oder zusätzlich ist vorgesehen, dass die Steuereinheit dazu ausgebildet und eingerichtet ist, das Arbeitsgerät derart zu steuern, dass eine Arbeitsaufgabe in der Arbeitsumgebung, z. B. ein Reinigungsvorgang, in möglichst kurzer Zeit durchgeführt wird, insbesondere bei Arbeitsaufgaben, bei denen die Kapazität des Energiespeichers nicht für die Erledigung der gesamten Arbeitsaufgabe ausreichend ist. Beispielsweise ist dazu vorgesehen, dass der Energiespeicher bei einem Ladevorgang nach einer ersten oder beliebigen Entleerung während der Erledigung einer Arbeitsaufgabe nur genau so weit geladen wird, wie es für die die Erledigung eines verbleibenden Teils einer Arbeitsaufgabe ausreichend ist.

Des Weiteren alternativ oder zusätzlich ist vorgesehen, dass die Steuereinheit das Arbeitsgerät derart steuert, dass ein möglichst großer Anteil der Kapazität des Energiespeichers für die Erledigung der Arbeitsaufgabe verwendet wird, und ein möglichst geringer Anteil der Kapazität für reine Fahrwege zu einer Basisstation. Das kann beispielsweise dadurch erreicht werden, dass ein Pfad für die Erledigung der Arbeitsaufgabe derart geplant wird, dass sich das Arbeitsgerät bei Erreichen eines Mindestladezustandes in räumlicher Nähe zu einer Basisstation befindet.

Ferner alternativ oder zusätzlich ist vorgesehen, dass die Steuereinheit dazu ausgebildet und eingerichtet ist, das Arbeitsgerät derart zu steuern, dass ein Reinigen und ein Laden des Energiespeichers nur in solchen Bereichen der Arbeitsumgebung erfolgt, in denen sich keine Menschen aufhalten bzw. in denen sich für einen bestimmten Zeitraum keine Menschen aufgehalten haben.

Insbesondere ist auch vorgesehen, die Steuereinheit dazu ausgebildet und eingerichtet ist, den Ladestrom an einer Basisstation, insbesondere im Rahmen der technischen Leistungsfähigkeit der Basisstation, anzupassen, um Ladezeiten zu verkürzen.

Die Erfindung hat gegenüber dem Stand der Technik den Vorteil, dass der Energieverbrauch für die Fahrten von und zu einer Basisstation zum Laden des Energiespeichers vorteilhaft minimiert wird. Vorzugsweise ist die Steuereinheit dazu ausgebildet und eingerichtet, die Position einer Mehrzahl von Basisstationen für einen voraussichtlichen Ladezeitpunkt ein einem geplanten Pfad in der Arbeitsumgebung einzuplanen, so dass der Energieaufwand für Fahrten zu und von einer Basisstation minimiert ist.

Besonders bevorzugt ist gemäß einer ersten Ausgestaltung des Arbeitsgerätes vorgesehen, dass als Fahrwegdaten zumindest ein Fahrweg zu mindestens einer Basisstation in der Arbeitsumgebung verwendet wird. Beispielsweise wird ein kürzester, ein zeitlich schnellster oder ein energiesparendster Fahrweg zu einer Basisstation verwendet. Der Fahrweg wird insbesondere von der Steuereinheit berechnet. Vorteilhaft ist eine Auswahl aus den vorgenannten Fahrwegen bzw. Fahrwegdaten durch einen Benutzer möglich. Alternativ oder zusätzlich dazu ist vorgesehen, dass ein prognostizierter Energieverbrauch für eine Rückfahrt zu mindestens einer Basisstation als Fahrwegdaten verwendet wird. Die Basisstation, die für einen Ladevorgang angefahren wird, wird folglich auf Basis des geringsten Energieverbrauchs für dessen Erreichen ausgewählt.

Bevorzugt ist vorgesehen, dass bei der Anpassung des Schwellenwertes die Fahrwegdaten zu einer vorbestimmten oder ausgewählten Basisstation berücksichtigt werden, beispielsweise einer Basisstation mit einem vorbestimmten Servicefunktionsumfang. Beispielsweise ist vorgesehen, dass eine Auswahl aus einer Mehrzahl an Basisstationen erfolgt, beispielsweise eine Basisstation mit einem kürzesten Fahrweg, und anschließend der Schwellenwert unter Berücksichtigung der Auswahl angepasst wird. Wenn die Steuereinheit feststellt, dass beispielsweise ein Schmutzsammelbehälter abgereinigt werden muss, dann wird z. B. nicht der Fahrweg zur nächstgelegenen Basisstation, sondern Fahrwegdaten zu der nächstgelegenen Basisstation verwendet, die den erforderlichen Servicefunktionsumfang bietet. Der Servicefunktionsumfang ist beispielsweise Laden und/oder Abreinigen eines Schmutzsammelbehälters und/oder Befeuchten eines Wischtuches.

Um den Schwellenwert möglichst effektiv anpassen zu können, ist gemäß einer weiteren Ausgestaltung des Arbeitsgeräts vorgesehen, dass zusätzlich zu den Fahrwegdaten zumindest eine Temperatur, insbesondere eine Temperatur des Energiespeichers und/oder eine Umgebungstemperatur und/oder ein Alter des Energiespeichers und/oder ein Kapazitätszustand des Energiespeichers für eine Anpassung des Schwellenwertes verwendet wird. Die vorgenannten Werte können den Energieverbrauch für das Zurücklegen eines Weges in der Arbeitsumgebung, insbesondere für die Rückfahrt zur nächstgelegenen Basisstation, beeinflussen, so dass es hier vorteilhaft herausgestellt ist, wenn diese beim flexiblen Anpassen des Schwellenwertes ebenfalls zusätzlich zu den Fahrwegdaten berücksichtigt werden. Der Kapazitätszustand des Energiespeichers ist z. B. der maximale Ladezustand, der nach einer bestimmten Anzahl von Ladezyklen bzw. einer Benutzungsdauer noch erreicht werden kann.

Eine weitere Ausgestaltung des Arbeitsgerätes sieht vor, dass die Steuereinheit dazu ausgebildet und eingerichtet ist, das Vorhandensein einer Basisstation in der Arbeitsumgebung bei einer Vorbeifahrt zu erkennen oder zu überprüfen und zumindest die Position der Basisstation in einem Speicher abzulegen, zu bestätigen oder zu löschen. Das Arbeitsgerät weist beispielsweise mindestens eine Sensoreinheit auf, mit der zumindest Umgebungsdaten, beispielsweise 3D-Informationen, die die Arbeitsumgebung repräsentieren, gesammelt werden können. Beispielsweise weist die Sensoreinheit mindestens ein Lasersystem und/oder mindestens eine Kamera auf. Vorzugsweise ist vorgesehen, dass die Sensoreinheit, insbesondere das Lasersystem und/oder die Kamera, für das Erkennen einer Basisstation verwendet werden/wird. Bewegt sich das Arbeitsgerät erstmals in einer Arbeitsumgebung oder hat ein Benutzer eine neue Basisstation in einer Arbeitsumgebung positioniert, ist die Steuereinheit dazu ausgebildet und eingerichtet, diese neue Position der Basisstation zu erkennen und in einem Speicher zur Verwendung für zukünftige Navigation bzw. Ladevorgänge abzulegen.

Ferner ist die Steuereinheit dazu ausgebildet und eingerichtet, bei einer Basisstation an einer bekannten Position deren Vorhandensein bei einer Vorbeifahrt zu überprüfen und im Speicher zu bestätigen. Ist eine bekannte Basisstation bei einer erneuten Vorbeifahrt nicht mehr vorhanden, kann diese von der Steuereinheit auch im Speicher gelöscht werden. Vorzugsweise ist der Speicher mit Kartendaten verknüpft, so dass die Position in den Kartendaten abgespeichert, bestätigt oder gelöscht wird. Beispielsweise weist die Basisstation mindestens ein Erkennungsmittel, z. B. einen QR-Code zur optischen Erkennung oder eine Funkeinrichtung, auf.

Um vorteilhaft die Zeit für die Erledigung einer Arbeitsaufgabe, beispielsweise der Reinigung einer Arbeitsumgebung, insbesondere in großen Arbeitsumgebungen zu reduzieren, ist gemäß einer weiteren Ausgestaltung vorgesehen, dass die Steuereinheit dazu ausgebildet und eingerichtet ist, einen Ladevorgang des Energiespeichers an einer Basisstation nur so lange durchzuführen, bis ein Ladezustand erreicht ist, der für das Abschließen einer geplanten Arbeitsaufgabe und die Rückkehr des Arbeitsgeräts an mindestens eine Basisstation, insbesondere einer von der für den vorangehenden Ladevorgang abweichenden Ladestation, ausreichend ist. Das weist den Vorteil auf, dass die Zeit zur Erledigung der Arbeitsaufgabe reduziert wird und dass der Energiespeicher nicht immer voll aufgeladen und nahezu vollständig entladen werden muss, wodurch die Lebensdauer des Energiespeichers gesteigert wird.

Um den Schwellenwert genauer anpassen zu können, ist gemäß einer weiteren Ausgestaltung des Arbeitsgerätes vorgesehen, dass die Steuereinheit dazu ausgebildet und eingerichtet ist, den Energieverbrauch des Arbeitsgerätes für das Zurücklegen eines bestimmten Fahrweges und/oder die Veränderung des Ladezustands des Energiespeichers während des Zurücklegens eines bestimmten Fahrweges in der Arbeitsumgebung zu ermitteln. Diese Daten werden vorzugsweise dazu verwendet, die Steuereinheit in Bezug auf den Energieverbrauch bzw. die Veränderung des Ladezustands des Energiespeichers für das Zurücklegen eines vorbestimmten Fahrweges zu kalibrieren und dadurch die Anpassung des Schwellenwertes verbessern zu können. Insbesondere können sich diese Werte im Laufe der Lebensdauer eines Arbeitsgerätes ändern, so dass von Zeit zu Zeit eine Anpassung erforderlich ist. Vorzugsweise erfolgt das Ermitteln der vorgenannten Daten zeit- oder anlassgesteuert. Vorzugsweise erfolgt das Ermitteln in bestimmten Zeitabständen oder wenn eine Abweichung des Energieverbrauchs oder eine Veränderung des Ladezustandes für einen bekannten Fahrweg erkannt wird, die einen Schwellenwert überschreitet. Ferner ist auch vorgesehen, dass das Ermitteln durch einen Benutzer manuell veranlasst wird, beispielweise durch eine Eingabe in einem mobilen Datenverarbeitungsgerät, z. B. einem Smartphone, oder über ein Eingabemittel am Arbeitsgerät.

Gemäß einer weiteren Ausgestaltung des Arbeitsgerätes hat es sich als vorteilhaft herausgestellt, wenn die Steuereinheit dazu ausgebildet und eingerichtet ist, zumindest einen Pfad für die Erledigung einer Arbeitsaufgabe in der Arbeitsumgebung zu planen. Bei der Planung des Pfades wird die Position mindestens einer Basisstation für die Durchführung mindestens eines Ladevorgangs während der Erledigung der Arbeitsaufgabe verwendet. Der Pfad in der Arbeitsumgebung zur Erledigung einer Arbeitsaufgabe, beispielsweise ein Reinigen der Arbeitsumgebung, wird folglich so geplant, dass sich zum richtigen Zeitpunkt eine Basisstation zur Durchführung eines Ladevorgangs in der Nähe befindet. Der Reinigungsvorgang wird folglich zeitlich so optimiert, dass das Arbeitsgerät möglichst lange seine Arbeitsaufgabe erledigen kann, dann geladen wird und anschließend seine Arbeitsaufgabe fortführt. Vorzugsweise wird bei der Pfadplanung die Position mindestens einer von einer Ausgangsbasisstation abweichenden Basisstation für den Ladevorgang verwendet. Es ist auch vorgesehen, dass ein Ladevorgang an einer Mehrzahl unterschiedlicher Basisstationen geplant wird. Dadurch vergrößert sich der Aktionskreis des Arbeitsgerätes, da das Arbeitsgerät zum Laden nicht an die Basisstation zurückkehrt, von der es gestartet ist, sondern es wird eine Basisstation in der Arbeitsumgebung verwendet, die nicht die Ausgangsbasisstation ist.

Besonders bevorzugt ist vorgesehen, dass die Steuereinheit dazu ausgebildet und eingerichtet ist, zumindest einen Pfad für die Erledigung einer Arbeitsaufgabe in der Arbeitsumgebung derart zu planen, dass sich das Arbeitsgerät bei Erreichen eines Mindestladezustandes in einem vorbestimmten Abstand zur Basisstation befindet. Bei dem Mindestladezustand handelt es sich vorzugsweise um einen unteren Grenzwert für den Schwellenwert. Dadurch wird gewährleistet, dass der Schwellenwert vorteilhaft auf einen minimalen Wert reduziert werden kann.

Um vorteilhaft ein Erreichen der Basisstation zu gewährleisten, sieht eine weitere Ausgestaltung des Arbeitsgeräts vor, dass die Steuereinheit dazu ausgebildet und eingerichtet ist, das Arbeitsgerät derart zu steuern, dass nach Erreichen des angepassten Schwellenwertes eine Fahrt zu einer Basisstation veranlasst wird, und dass ein vorbestimmter Abstand zu einer Basisstation nicht mehr überschritten wird und/oder dass ein vorbestimmter Abstand zu einer Basisstation nur noch verringert wird und/oder dass ein vorbestimmter Bereich in der Arbeitsumgebung nicht mehr verlassen wird. Der vorbestimmte Abstand kann beispielsweise kontinuierlich angepasst werden, wenn sich im weiteren Verlauf ergibt, dass der Energieverbrauch doch geringer als erwartet ist. Dadurch wird gewährleistet, dass das Arbeitsgerät zu keinem Zeitpunkt so weit von einer Basisstation, die zum Laden geeignet ist, entfernt ist, dass die Ladestation bzw. die Basisstation nicht mehr erreichbar ist.

Gemäß einer weiteren Ausgestaltung des Arbeitsgeräts ist die Steuereinheit dazu ausgebildet und eingerichtet, das Arbeitsgerät derart zu steuern, sich nach Erledigung einer Arbeitsaufgabe, beispielsweise einer Reinigungsaufgabe, an eine nächstliegende, insbesondere von der Ausgangsbasisstation abweichende, Basisstation zu bewegen. Dadurch kann der Radius des Arbeitsgerätes in Bezug auf eine Ausgangsbasisstation vergrößert werden, wenn von der Ausgangsbasisstation abweichende Basisstationen angefahren werden. Vorzugsweise sind die von der Ausgangsbasisstation abweichenden Basisstationen ausschließlich zum Laden des Energiespeichers, insbesondere zum induktiven Laden des Energiespeichers, ausgebildet.

Insbesondere um das Erkennen von Basisstationen in der Arbeitsumgebung zu verbessern, ist gemäß einer weiteren Ausgestaltung des Arbeitsgerätes vorgesehen, dass das Arbeitsgerät mindestens einen Sensor aufweist, mit dem ein Magnetfeld, insbesondere einer Basisstation mit mindestens einer Spule zum induktiven Laden, erfassbar ist. Die Steuereinheit ist dazu ausgebildet und eingerichtet, mit dem Sensor mindestens ein Magnetfeld einer Basisstation bei einer Überfahrt zu erkennen. Beispielsweise ist die Basisstation als Ladematte zum induktiven Laden mit mindestens einer Spule ausgebildet. Bei einer Überfahrt erkennt der Sensor das Vorhandensein eines, insbesondere nur zum Zwecke des Erkennens reduzierten, Magnetfeldes und erkennt dadurch das Vorhandensein und die Position der Basisstation. Vorzugsweise ist der Sensor dazu ausgebildet und eingerichtet, ein Magnetfeld einer Ladespule einer Basisstation, insbesondere einer Ladematte, zu erkennen. Die Position der Basisstation in der Arbeitsumgebung wird nach dem Erkennen eines Magnetfeldes in einem Speicher abgelegt, insbesondere in Kartendaten in einem Speicher abgelegt.

Um die optimale Verfügbarkeit einer Basisstation in der Arbeitsumgebung zu gewährleisten, ist gemäß einer weiteren Ausgestaltung des Arbeitsgerätes vorgesehen, dass die Steuereinheit dazu ausgebildet und eingerichtet ist, für eine bestimmte Arbeitsumgebung eine optimierte Anzahl an Basisstationen zu ermitteln und diese Anzahl einem Benutzer an einem Anzeigemittel anzuzeigen oder für eine Übermittlung zur Anzeige bereitzustellen. Die Steuereinheit ermittelt unter Berücksichtigung der Art und Größe der Arbeitsumgebung sowie der zurückzulegenden Fahrwege eine optimierte Anzahl an Basisstationen für die Arbeitsumgebung. Insbesondere wird auch die Art und Größe, das Alter und/oder die verbleibende Ladekapazität des Energiespeichers herangezogen. Vorzugsweise ist auch eine Position für eine neue Basisstation in einer Arbeitsumgebung vorschlagbar. Die vorgeschlagene Position wird in einem Anzeigemittel des Arbeitsgerätes beispielsweise angezeigt oder an einer Schnittstelle zur Übermittlung zur Anzeige beispielsweise an einem Smartphone oder einem externen Display bereitgestellt.

Ferner ist vorgesehen, dass die Steuereinheit für eine bereits vorhandene Basisstation einen verbesserten, optimierten Standort in der Arbeitsumgebung ermittelt und diesen dem Benutzer an einem Anzeigemittel anzeigt oder für eine Übermittlung zur Anzeige bereitstellt. Beispielsweise erfolgt die Ermittlung der optimalen Anzahl oder eines optimierten Standortes unter Verwendung einer maximalen Länge eines Fahrweges zu einer Basisstation, der an keiner Position in der Arbeitsumgebung überschritten werden soll. Anzahl und Positionen der Basisstation werden also vorzugsweise so vorgeschlagen, dass ein maximaler Fahrweg an keiner Position in der Arbeitsumgebung überschritten wird. Beispielsweise ist auch vorgesehen, dass je Flächeneinheit, beispielsweise je Raum, mindestens eine Basisstation vorhanden ist. Insbesondere ist vorgesehen, dass die Ermittlung einer optimierten Anzahl an Basisstationen und/oder eines optimierten Standortes für eine Basisstation nach oder während einer Bewegung des Arbeitsgerätes in der Arbeitsumgebung oder nach oder während einer Kartierungsfahrt, also einer ersten Fahrt des Arbeitsgerätes in der Arbeitsumgebung, erfolgt.

Im Zusammenhang mit dem beschriebenen Arbeitsgerät hat sich eine spezielle Basisstation, die ausschließlich für Ladezwecke ausgebildet ist, als vorteilhaft herausgestellt. Die Erfindung betrifft daher ferner eine Basisstation für ein zur autonomen Bewegung in einer Arbeitsumgebung ausgebildetes Arbeitsgerät. Die Basisstation ist als flexible Ladematte ausgebildet, wobei die Ladematte mindestens ein Trägermaterial und mindestens eine an dem Trägermaterial befestigte Spule zum Durchführen eines induktiven Ladevorgangs eines Energiespeichers des Arbeitsgerätes aufweist. Das Arbeitsgerät weist eine korrespondierende Gegenspule auf, so dass der Energiespeicher des Arbeitsgerätes geladen werden kann, wenn die Gegenspule des Arbeitsgerätes in der Nähe der Spule der Ladematte positioniert ist.

Die Spulen der Ladematte sind in dem Trägermaterial der Ladematte befestigt, eingebettet und/oder auf das Trägermaterial aufgedruckt. Als vorteilhafte Materialien haben sich Kunststoff oder Gummi herausgestellt. Besonders bevorzugt ist vorgesehen, dass die Ladematte vertikal an einer Wand oder einer Fußleiste anbringbar ist, um das Arbeitsgerät zu laden. Dazu ist eine korrespondierende Gegenspule dann in einem Randbereich des Arbeitsgerätes angeordnet.

Vorzugsweise weist die Ladematte in mindestens einem Randbereich, insbesondere in allen Randbereichen, mindestens einen Gewichtskörper auf, um ein flaches Aufliegen der Ladematte auf einem Untergrund und ein Auffahren des Arbeitsgerätes zu gewährleisten. Vorzugsweise ist vorgesehen, dass die Ladematte, insbesondere die Spule, deutlich größer als eine Grundfläche des Arbeitsgerätes ist. Dadurch muss keine sehr exakte Positionierung des Arbeitsgerätes auf der Ladematte erfolgen, sondern das Arbeitsgerät kann relativ ungenau auf der Ladematte positioniert werden.

Die erfindungsgemäße Basisstation wird beispielsweise dadurch ausgebildet, dass das Trägermaterial mit der Spule aufrollbar und/oder faltbar ausgebildet ist. Das Trägermaterial ist beispielsweise ausreichend flexibel, so dass die Ladematte aufgerollt werden kann. Dadurch kann die Ladematte durch einen Benutzer einfach verstaut, transportiert und an anderer Stelle wieder ausgelegt werden. Ferner kann die Ladematte beispielsweise unterhalb eines Teppichs oder einer Fußmatte platzsparend angeordnet werden. Vorzugsweise ist vorgesehen, dass die Ladematte mindestens einen Schwingkreis oder eine Mehrzahl an Schwingkreisen aufweist, um einen resonant-induktiven Ladevorgang zu ermöglichen.

Ferner betrifft die Erfindung ein Arbeitssystem, wobei das Arbeitssystem mindestens ein Arbeitsgerät nach einem der beschriebenen Ausführungsbeispiele und mindestens zwei als Ladematten ausgebildete Basisstationen aufweist. Das Arbeitsgerät und die beiden Ladematten werden in einer Arbeitsumgebung, beispielsweise temporär, positioniert, so dass das Arbeitsgerät, beispielsweise ein Reinigungsgerät, in der Arbeitsumgebung Arbeitsaufgaben erledigen kann. Für das Aufladen des Energiespeichers werden die Ladematten bereitgestellt. Anschließend kann das Arbeitssystem mit geringem Aufwand wieder abgebaut und in einer anderen Arbeitsumgebung installiert werden.

Die eingangs genannten Aufgabe ist ferner gelöst durch ein Arbeitsgerät, aufweisend mindestens eine Steuereinheit und mindestens einen Energiespeicher, wobei das Arbeitsgerät dazu ausgebildet und eingerichtet ist, sich in einer Arbeitsumgebung autonom fortzubewegen, wobei die Steuereinheit dazu ausgebildet und eingerichtet ist, mindestens einen Pfad in der Arbeitsumgebung zu planen, der das Laden an mindestens zwei von einer Ausgangsbasisstation abweichenden Basisstationen, insbesondere als Ladematten ausgebildeten Basisstationen, beinhaltet. Die Ausgestaltungen des Arbeitsgeräts ergeben sich aus den beschriebenen Ausgestaltungen. Ein derartiges Arbeitsgerät weist den Vorteil auf, dass der Aktionsradius des Arbeitsgeräts zur Erledigung von Arbeitsaufgaben, insbesondere Reinigungsaufgaben, in der Arbeitsumgebung vergrößert wird.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Arbeitsgerätes in perspektivischer Ansicht,
- Fig. 2: ein Ausführungsbeispiel einer Arbeitsumgebung in Draufsicht,
- Fig. 3: eine schematische Darstellung einer Steuerung eines Arbeitsgerätes durch eine Steuereinheit,
- Fig. 4: ein Ausführungsbeispiel einer als Ladematte ausgebildeten Basisstation, und
- Fig. 5: einen schematischen Aufbau einer Datenverarbeitungseinheit der Steuereinheit.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

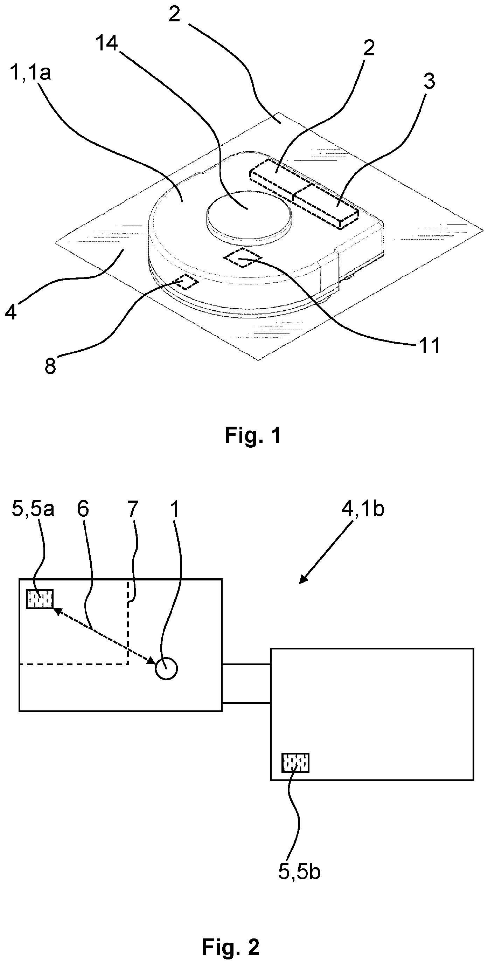

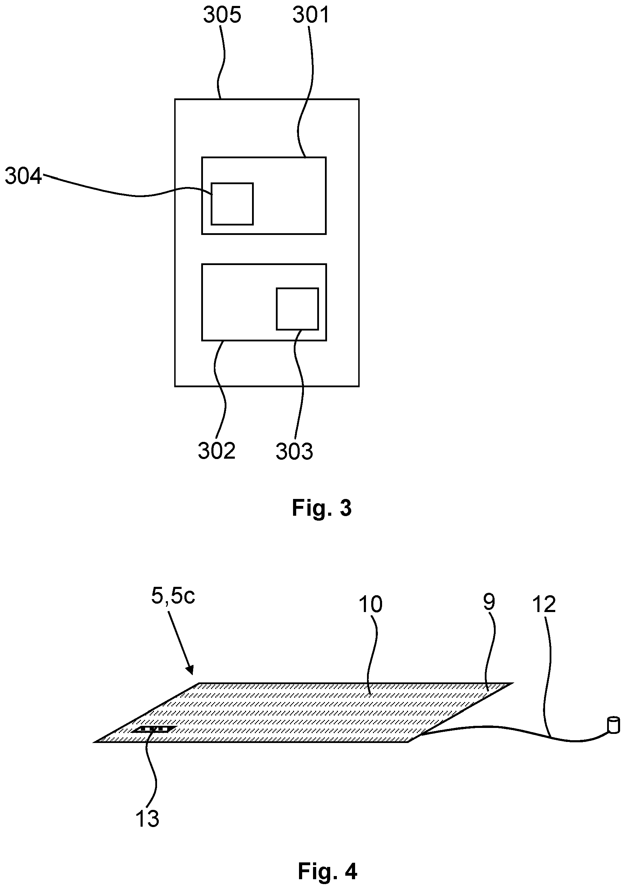

Fig. 1 zeigt ein Ausführungsbeispiel eines Arbeitsgerätes 1 in perspektivischer Ansicht. Das Arbeitsgerät 1 ist hier als Reinigungsgerät, nämlich als Saugroboter ausgebildet. Das Arbeitsgerät 1 weist eine Steuereinheit 2 und einen Energiespeicher 3 in Form eines Akkus auf, die hier in einem Gehäuse 1a angeordnet sind. Das Arbeitsgerät 1 weist zudem eine Sensoreinheit 14 auf, mit der Umgebungsdaten für eine Bewegung in der Arbeitsumgebung 4 erfassbar sind. Fig. 3 zeigt eine schematische Darstellung einer Steuerung eines Arbeitsgerätes 1, z. B. gemäß Fig. 1, durch die Steuereinheit 2. Das Arbeitsgerät 1 ist, insbesondere durch die Steuereinheit 2, zum autonomen Fortbewegen 301 (siehe Fig. 3) in einer Arbeitsumgebung 4 ausgebildet und eingerichtet. Die Steuereinheit 2 ist ferner zum Veranlassen 302 des Arbeitsgeräts 1 ausgebildet und eingerichtet, sich zu einer Basisstation 5, beispielsweise dargestellt in Fig. 2 und Fig. 4, in der Arbeitsumgebung 4 zu bewegen, wenn ein Ladezustand des Energiespeichers 3 einen Schwellenwert erreicht.

Erfindungsgemäß ist nun vorgesehen, dass die Steuereinheit 2 zudem zum Anpassen 303 des Schwellenwertes unter Verwendung von Fahrwegdaten in Bezug auf mindestens eine Basisstation 5 ausgebildet und eingerichtet ist. Beispielweise wird als Fahrwegdaten der aktuelle oder ein geplanter Abstand des Arbeitsgerätes 1 zu einer Basisstation 5 in der Arbeitsumgebung 4 verwendet. Dadurch kann beispielsweise gewährleistet werden, dass das Arbeitsgerät 1 länger für eine Bewegung in der Arbeitsumgebung, beispielsweise zur Erledigung einer Arbeitsaufgabe, z. B. einen Reinigungsvorgang, zur Verfügung steht, wenn sich eine Basisstation 5 zum Aufladen des Energiespeichers 3 in unmittelbarer Nähe des Arbeitsgerätes 1 befindet. Ferner haben sich als Fahrwegdaten ein kürzester Fahrweg 6 zur nächstliegenden Basisstation 5 (siehe Fig. 2) sowie ein prognostizierter Energieverbrauch für eine Rückfahrt zu mindestens einer Basisstation 5 als bevorzugt herausgestellt.

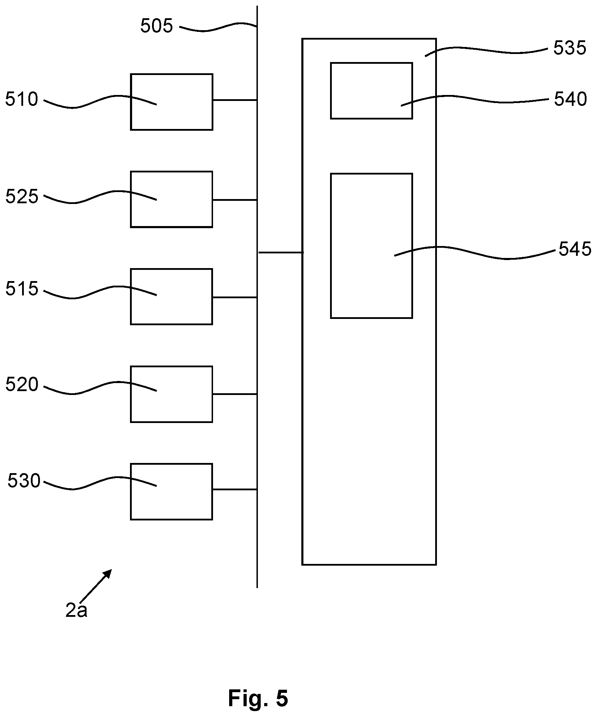

Gemäß Fig. 3 ist die Steuereinheit 2 ferner zu einem Erkennen 304 einer Basisstation 5 in der Arbeitsumgebung 4 bei einer Vorbeifahrt ausgebildet, um anschließend die Position der Basisstation 5 in einem Speicher 525 (siehe Fig. 5) abzulegen oder zu löschen. Vorzugsweise hält der Speicher 525 die Daten in Form von Kartendaten bereit, in denen die Position abgelegt oder gelöscht werden kann.

Ferner ist die Steuereinheit 2 zum Planen 305 mindestens eines Pfades für die Erledigung mindestens einer Arbeitsaufgabe in der Arbeitsumgebung 4 ausgebildet und eingerichtet. Bei dem Planen 305 des Pfades wird insbesondere die Position mindestens einer Basisstation 5,5a für die Durchführung mindestens eines Ladevorgangs während der Erledigung der Arbeitsaufgabe verwendet. Bei der Basisstation 5,5a, die für den Ladevorgang eingeplant wird, handelt es sich beispielsweise um eine Ladestation 5, die von der Ausgangsbasisstation 5b - siehe beispielsweise Fig. 2 - abweichend ist. Das Arbeitsgerät 1 lädt folglich an einer Basisstation 5,5a auf, die nicht die Basisstation 5b ist, von der das Arbeitsgerät 1 ursprünglich losgefahren ist und bevor die Arbeitsaufgabe, beispielsweise eine Reinigung, abgeschlossen ist.

Des Weiteren ist die Steuereinheit 2 optional zum Planen 305 mindestens eines Pfades für die Erledigung einer Arbeitsaufgabe in der Arbeitsumgebung 4 derart ausgebildet und eingerichtet, dass sich das Arbeitsgerät 1 entlang des Pfades bei Erreichen eines Mindestladezustands des Energiespeichers 3 in einem vorbestimmten Abstand 7 zu einer Basisstation 5 befindet.

Vorzugsweise steuert die Steuereinheit 2 das Arbeitsgerät 1 derart, dass nach Erreichen des Schwellenwertes ein Abstand 7 zur Basisstation 5 bei einer weiteren Bewegung nicht mehr überschritten und nur noch verringert werden kann. Beispielsweise handelt es sich bei dem Abstand 7 um einen Radius.

Das Arbeitsgerät 1 weist gemäß Fig. 1 mindestens einen Sensor 8 auf, mit dem ein Magnetfeld erfassbar ist. Die Steuereinheit 2 ist dazu ausgebildet und eingerichtet ist, unter Verwendung des Sensors 8 bei einer Überfahrt über zumindest einen Teil der Basisstation 5 mindestens ein Magnetfeld einer Basisstation 5 zu erkennen. Die Basisstation 5 mit einem Magnetfeld, insbesondere zum induktiven Laden des Arbeitsgerätes 1, ist beispielsweise als Ladematte 5c, wie in Fig. 4 dargestellt, ausgebildet.

Fig. 2 zeigt ein Ausführungsbeispiel eines Arbeitssystems 1b mit mindestens einem Arbeitsgerät 1 und mindestens zwei als Ladematten 5c ausgebildeten Basisstationen 5. In dem dargestellten Beispiel sind die beiden Ladematten 5c in unterschiedlichen Räumen der Arbeitsumgebung 4 angeordnet. Das Arbeitsgerät 1 hat seinen Pfad zur Erledigung einer Arbeitsaufgabe, hier der Reinigung der Arbeitsumgebung 4, an der Ausgangsbasisstation 5,5b begonnen und in dem anderen Raum fortgesetzt. In dem anderen Raum befindet sich eine von der Ausgangsbasisstation 5,5b abweichende Basisstation 5,5a, die vor der abschließenden Rückkehr zur Ausgangsbasisstation 5,5b zum Laden des Energiespeichers 3, also zum Zwischenladen, verwendet wird. Der Energiespeicher 3 wird dabei vorzugsweise nur so weit geladen, dass die Arbeitsaufgabe abgeschlossen werden kann und eine Rückkehr zur Ausgangsbasisstation 5b erfolgen kann. Dadurch, dass beide Basisstationen 5 bei diesem Beispiel als Ladematten 5c ausgebildet sind, ist der Ladevorgang sehr zuverlässig, da keine physische Kontaktierung erfolgen muss. Dieses Manöver findet daher berührungslos, verschleißarm und mit geringer Präzision bezüglich der Positionierung statt.

Fig. 4 zeigt ein Ausführungsbeispiel einer Basisstation 5 für ein zur autonomen Bewegung in einer Arbeitsumgebung 4 ausgebildetes Arbeitsgerät 1, die als flexible Ladematte 5c ausgebildet ist. Die Ladematte 5c weist ein Trägermaterial 9 und mindestens eine an dem Trägermaterial 9 befestigte Spule 10 zur Durchführung eines induktiven Ladevorgangs eines Energiespeichers 3 des Arbeitsgerätes 1 auf. Das Arbeitsgerät 1 weist gemäß Fig. 1 eine korrespondierende Spule 11 auf, die mit dem Energiespeicher 3 verbunden ist. Die Ladematte 5c ist im Wesentlichen flach ausgebildet und weist vorzugsweise eine Höhe zwischen 1 mm und 8 mm auf. Die Grundfläche der Ladematte 5c ist vorzugsweise größer als die Grundfläche eines Arbeitsgeräts 1, z. B. gemäß Fig. 1. Bei einer Überfahrt eines Arbeitsgeräts 1 ist das Magnetfeld der Spule 10 durch den Sensor 8 (siehe Fig. 1) erfassbar.

Die als Ladematte 5c ausgebildete Basisstation 5 weist ferner eine Anschlussleitung 12 zum Anschluss an eine Spannungsversorgung sowie eine optische Markierung 13, hier in Form eines QR-Codes, auf. Die optische Markierung 13 dient beispielsweise der - zusätzlichen oder alternativen - optischen Erkennung der Basisstation 5 durch ein Arbeitsgerät 1, beispielsweise durch eine an dem Arbeitsgerät 1 angeordnete Kamera - nicht separat dargestellt.

Fig. 5 zeigt eine schematische Darstellung einer Datenverarbeitungseinheit 2a für eine Steuereinheit 2 der beschriebenen Ausführungsbeispiele. Es ist vorgesehen, dass einzelne Elemente der Datenverarbeitungseinheit 2a mehrfach vorhanden sind, insbesondere wenn die Datenverarbeitungseinheit 2a teilweise in einem Arbeitsgerät 1 und teilweise in einem räumlich entfernten Computer realisiert ist. Fig. 5 zeigt eine schematische Darstellung einer Ausführungsform einer Datenverarbeitungseinheit 2a, die einige oder alle Schritte zu den in den verschiedenen Ausführungsformen beschriebenen Funktionen der Steuereinheit 2 bzw. deren Schritte ausführen kann.

Die Datenverarbeitungseinheit 2a ist mit Hardwareelementen dargestellt, die über einen Bus 505 elektrisch gekoppelt sind oder gegebenenfalls auf andere Weise miteinander kommunizieren. Die Hardwareelemente können einen oder mehrere Prozessoren 510, einschließlich und ohne Einschränkung einen oder mehrere Allzweckprozessoren und/oder einen oder mehrere Spezialprozessoren, ein oder mehrere Eingabegeräte 515 und ein oder mehrere Ausgabegeräte 520 umfassen. Die Datenverarbeitungseinheit 2a weist ferner einen oder mehrere Speicher 525 auf und/oder steht mit diesen in Verbindung.

Die Datenverarbeitungseinheit 2a kann ferner ein Kommunikationssubsystem 530 aufweisen. In einigen Ausführungsformen umfasst die Datenverarbeitungseinheit 2a außerdem einen Arbeitsspeicher 535. Die Datenverarbeitungseinheit 2a kann auch Software-Elemente enthalten, die sich - wie beispielhaft dargestellt - im Arbeitsspeicher 535 befinden. Davon umfasst sein können ein Betriebssystem 540, Gerätetreiber, ausführbare Bibliotheken und/oder ein anderer Code, beispielsweise ein oder mehrere Anwendungsprogramme 545.

Lediglich beispielhaft können eine oder mehrere Schritte, die in Bezug auf die Funktionen des Steuereinheit 2 beschrieben sind, als Code und/oder Anweisungen implementiert werden, die von einem Computer und/oder einem Prozessor innerhalb eines Computers ausführbar sind; in einem Aspekt können dann ein solcher Code und/oder solche Anweisungen verwendet werden, um einen Allzweckcomputer oder ein anderes Gerät zu konfigurieren und/oder anzupassen, um eine oder mehrere Schritte gemäß der beschriebenen Funktionen der Steuereinheit 2 auszuführen.

Ein Teil dieser Anweisungen und/oder der Code kann auf einem, computerlesbaren, Speichermedium, wie dem/den oben beschriebenen Speicher 525, gespeichert werden. Wie oben erwähnt, können in einem Aspekt einige Ausführungsformen ein Computersystem wie die Datenverarbeitungseinheit 2a verwenden, um die Funktionen der Steuereinheit 2 auszuführen. Gemäß einer Ausführungsform werden einige oder alle Funktionen der Steuereinheit 2 von der Datenverarbeitungseinheit 2a als Reaktion auf die Ausführung einer oder mehrerer Sequenzen von einem oder mehreren Befehlen durch den Prozessor 510 durchgeführt, die in das Betriebssystem 540 und/oder einen anderen Code, wie ein Anwendungsprogramm 545, das im Arbeitsspeicher 535 enthalten ist, integriert sein können. Solche Anweisungen können in den Arbeitsspeicher 535 von einem anderen computerlesbaren Medium, wie einem oder mehreren der Speicher 525, eingelesen werden. Lediglich als Beispiel könnte die Ausführung der im Arbeitsspeicher 535 enthaltenen Befehlsfolgen den/die Prozessor(en) 510 veranlassen, eine oder mehrere Schritte der beschriebenen Steuereinheit 2 oder Funktionen des Arbeitsgeräts 1 durchzuführen.

Die Begriffe "maschinenlesbares Medium" und "computerlesbares Medium", wie sie hier verwendet werden, beziehen sich auf jedes Medium, das an der Bereitstellung von Daten beteiligt ist, die eine Datenverarbeitungseinheit veranlassen, in einer bestimmten Weise zu arbeiten. In einer Ausführungsform, die unter Verwendung der Datenverarbeitungseinheit 2a implementiert wird, können verschiedene computerlesbare Medien an der Bereitstellung von Anweisungen/Codes für den/die Prozessor(en) 510 zur Ausführung beteiligt sein und/oder zum Speichern und/oder Übertragen solcher Anweisungen/Codes verwendet werden. In vielen Implementierungen ist ein computerlesbares Medium ein physisches und/oder greifbares Speichermedium. Ein solches Medium kann die Form eines nichtflüchtigen Mediums oder eines flüchtigen Mediums haben. Zu den nichtflüchtigen Medien gehören beispielsweise optische und/oder magnetische Platten, wie die Speicher 525. Zu den flüchtigen Medien gehören unter anderem dynamische Speicher, wie der Arbeitsspeicher 535.

Das Kommunikationssubsystem 530 und/oder seine Komponenten empfangen üblicherweise Signale, und der Bus 505 kann dann die Signale und/oder die Daten, Anweisungen usw., die von den Signalen getragen werden, zum Arbeitsspeicher 535 transportieren, aus dem der/die Prozessor(en) 510 die Anweisungen abruft und ausführt. Die vom Arbeitsspeicher 535 empfangenen Anweisungen können optional vor oder nach der Ausführung durch den/die Prozessor(en) 510 auf Speichern 525 gespeichert werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Arbeitsgerät
- 1a: Gehäuse
- 1b: Arbeitssystem
- 2: Steuereinheit
- 2a: Datenverarbeitungseinheit
- 3: Energiespeicher
- 4: Arbeitsumgebung
- 5: Basisstation
- 5a: Basisstation für Ladevorgang
- 5b: Ausgangsbasisstation
- 5c: Ladematte
- 6: Fahrweg
- 7: Abstand
- 8: Sensor
- 9: Trägermaterial
- 10: Spule
- 11: Spule
- 12: Anschlussleitung
- 13: Markierung
- 14: Sensoreinheit

- 301: Fortbewegen
- 302: Veranlassen
- 303: Anpassen
- 304: Erkennen
- 305: Planen

- 505: Bus
- 510: Prozessor
- 515: Eingabegerät
- 520: Ausgabegerät
- 525: Speicher
- 530: Kommunikationssubsystem
- 535: Arbeitsspeicher
- 540: Betriebssystem
- 545: Anwendungsprogramm

## Patentansprüche

1. Arbeitsgerät (1), aufweisend mindestens eine Steuereinheit (2) und mindestens einen Energiespeicher (3), wobei das Arbeitsgerät (1) dazu ausgebildet und eingerichtet ist, sich in einer Arbeitsumgebung (4) autonom fortzubewegen, wobei die Steuereinheit (2) dazu ausgebildet und eingerichtet ist, das Arbeitsgerät (1) zu veranlassen, sich zu einer Basisstation (5) in der Arbeitsumgebung (4) zu bewegen, wenn ein Ladezustand des Energiespeichers (3) einen Schwellenwert erreicht,
**dadurch gekennzeichnet, dass**
die Steuereinheit (2) dazu ausgebildet und eingerichtet ist, den Schwellenwert unter Verwendung von Fahrwegdaten in Bezug auf mindestens eine Basisstation (5) anzupassen.

2. Arbeitsgerät (1) nach Anspruch 1,
**dadurch gekennzeichnet, dass**
als Fahrwegdaten ein Fahrweg zu mindestens einer Basisstation (5), vorzugsweise der kürzeste, der schnellste oder der energiesparendste Fahrweg, und/oder ein prognostizierter Energieverbrauch für eine Rückfahrt zu mindestens einer Basisstation (5) verwendet wird, insbesondere dass es sich um eine Basisstation (5) mit einem vorbestimmten Servicefunktionsumfang handelt.

3. Arbeitsgerät (1) nach Anspruch 1 oder 2,
**dadurch gekennzeichnet, dass**
zusätzlich zumindest eine Temperatur, insbesondere eine Temperatur des Energiespeichers (3) und/oder eine Umgebungstemperatur, und/oder ein Alter des Energiespeichers (3) und/oder ein Kapazitätszustand des Energiespeichers (3) für eine Anpassung des Schwellenwertes verwendet wird.

4. Arbeitsgerät (1) nach einem der Ansprüche 1 bis 3,
**dadurch gekennzeichnet, dass**
die Steuereinheit (2) dazu ausgebildet und eingerichtet ist, das Vorhandensein einer Basisstation (5) in der Arbeitsumgebung (4) bei einer Vorbeifahrt zu erkennen oder zu überprüfen und zumindest die Position der Basisstation (5) in einem Speicher (525) abzulegen oder zu löschen, insbesondere in Kartendaten abzuspeichern oder zu löschen.

5. Arbeitsgerät (1) nach einem der Ansprüche 1 bis 4,
**dadurch gekennzeichnet, dass**
die Steuereinheit (2) dazu ausgebildet und eingerichtet ist, einen Ladevorgang des Energiespeichers (3) nur so lange durchzuführen, bis ein Ladezustand erreicht ist, der für das Abschließen einer geplanten Arbeitsaufgabe und die Rückkehr des Arbeitsgeräts (1) an mindestens eine Basisstation (5) ausreichend ist.

6. Arbeitsgerät (1) nach einem der Ansprüche 1 bis 5,
**dadurch gekennzeichnet, dass**
die Steuereinheit (2) dazu ausgebildet und eingerichtet ist, den Energieverbrauch des Arbeitsgeräts (1) für das Zurücklegen eines bestimmten Fahrweges und/oder die Veränderung des Ladezustandes des Energiespeichers (3) während des Zurücklegens eines bestimmten Fahrweges in der Arbeitsumgebung (4) zu ermitteln, insbesondere dass das Ermitteln zeit- oder anlassgesteuert erfolgt.

7. Arbeitsgerät (1) nach einem der Ansprüche 1 bis 6,
**dadurch gekennzeichnet, dass**
die Steuereinheit (2) dazu ausgebildet und eingerichtet ist, zumindest einen Pfad für die Erledigung einer Arbeitsaufgabe in der Arbeitsumgebung (4) zu planen, und dass bei der Planung des Pfades die Position mindestens einer Basisstation (5) für die Durchführung mindestens eines Ladevorgangs verwendet wird, insbesondere dass die Position mindestens einer von der Ausgangsbasisstation (5,5a) abweichenden Basisstation (5,5b) für einen Ladevorgang verwendet wird.

8. Arbeitsgerät (1) nach einem der Ansprüche 1 bis 7,
**dadurch gekennzeichnet, dass**
die Steuereinheit (2) dazu ausgebildet und eingerichtet ist, zumindest einen Pfad für die Erledigung einer Arbeitsaufgabe in der Arbeitsumgebung derart zu planen, dass sich das Arbeitsgerät (1) bei Erreichen eines Mindestladezustandes des Energiespeichers (3) in einem vorbestimmten Abstand (7) zur Basisstation (5) befindet.

9. Arbeitsgerät (1) nach einem der Ansprüche 1 bis 8,
**dadurch gekennzeichnet, dass**
die Steuereinheit (2) dazu ausgebildet und eingerichtet ist, das Arbeitsgerät (1) derart zu steuern, dass nach Erreichen des Schwellenwertes ein vorbestimmter Abstand (7) zu einer Basisstation (5) nicht mehr überschritten wird und/oder dass ein vorbestimmter Abstand (7) zu einer Basisstation (5) nur noch verringert wird und/oder dass ein vorbestimmter Bereich in der Arbeitsumgebung nicht mehr verlassen wird.

10. Arbeitsgerät nach einem der Ansprüche 1 bis 9,
**dadurch gekennzeichnet, dass**
die Steuereinheit (2) dazu ausgebildet und eingerichtet ist, das Arbeitsgerät (1) derart zu steuern, dass sich das Arbeitsgerät (1) nach Erledigung einer Arbeitsaufgabe an eine nächstliegende, insbesondere von der Ausgangsbasisstation (5,5a) abweichende, Basisstation (5,5b) bewegt.

11. Arbeitsgerät (1) nach einem der Ansprüche 1 bis 10,
**dadurch gekennzeichnet, dass**
mindestens ein Sensor (8) vorhanden ist, und dass die Steuereinheit (2) dazu ausgebildet und eingerichtet ist, mit dem Sensor (8) mindestens ein Magnetfeld einer Basisstation (5) bei einer Überfahrt zu erkennen, vorzugsweise dazu eingerichtet und ausgebildet ist, die Position der Basisstation (5) in der Arbeitsumgebung (4) nach dem Erkennen eines Magnetfeldes in einem Speicher (525) abzulegen, insbesondere in Kartendaten abzuspeichern.

12. Arbeitsgerät (1) nach einem der Ansprüche 1 bis 11,
**dadurch gekennzeichnet, dass**
die Steuereinheit (2) dazu ausgebildet und eingerichtet ist, für die Arbeitsumgebung (4) eine optimierte Anzahl an Basisstationen (5) zu ermitteln und diese Anzahl einem Benutzer an einem Anzeigemittel anzuzeigen oder für eine Übermittlung zur Anzeige bereitzustellen, vorzugsweise dass für jede Basisstation (5) ein optimierter Standort in der Arbeitsumgebung (4) ermittelt wird.

13. Basisstation (5) für ein zur autonomen Bewegung in einer Arbeitsumgebung (4) ausgebildetes Arbeitsgerät (1), wobei die Basisstation (5) als flexible Ladematte (5c) ausgebildet ist, wobei die Ladematte (5c) mindestens ein Trägermaterial (9) und mindestens eine an dem Trägermaterial (9) befestigte Spule (10) zum Durchführen eines induktiven Ladevorgangs eines Energiespeichers (3) des Arbeitsgeräts (1) aufweist.

14. Basisstation (5) nach Anspruch 13,
**dadurch gekennzeichnet, dass**
das Trägermaterial (9) mit der Spule (10) aufrollbar und/oder faltbar ausgebildet ist, und/oder dass mindestens ein Schwingkreis oder eine Mehrzahl an Schwingkreisen vorhanden ist, um einen resonant induktiven Ladevorgang zu ermöglichen.

15. Arbeitssystem (1b), aufweisend mindestens ein Arbeitsgerät (1), insbesondere nach einem der Ansprüche 1 bis 12, und mindestens zwei als Ladematten (5c) ausgebildete Basisstationen (5), insbesondere nach einem der Ansprüche 13 oder 14, wobei das Arbeitsgerät (1) mindestens eine Steuereinheit (2) und mindestens einen Energiespeicher (3) aufweist, wobei das Arbeitsgerät (1) dazu ausgebildet und eingerichtet ist, sich in einer Arbeitsumgebung (4) autonom fortzubewegen, und wobei jede Basisstation (5) jeweils mindestens eine Spule (10) zum induktiven Laden aufweist.
